# FASCICULE DE BREVET EUROPEEN

(11) **EP 3 140 104 B1**
(45) Date de publication et mention de la délivrance du brevet: **16.06.2021**
(21) Numéro de dépôt: 15721762.1
(22) Date de dépôt: 28.04.2015
(51) Int. Cl.: B29C 70/20, B29B 11/16

(54) **PROCÉDÉ DE RÉALISATION DE PRÉFORMES PAR APPLICATION ET FORMAGE DE FIBRES ORIENTÉES**
VERFAHREN ZUR ERZEUGUNG VON VORFORMLINGEN DURCH AUFBRINGEN UND FORMEN AUSGERICHTETER FASERN
METHOD FOR CREATING PREFORMS BY APPLYING AND SHAPING ORIENTED FIBERS

(30) Priorité: 09.05.2014 FR 1401062
(43) Date de publication de la demande: 15.03.2017
(73) Titulaire: Coriolis Group, 56530 Quéven (FR)
(72) Inventeur: HAMLYN Alexander, 56270 Ploemeur (FR)
(86) Numéro de dépôt international: PCT/FR2015/000091
(87) Numéro de publication internationale: WO 2015/170017

(56) Documents cités:
- WO-A1-2012/045969
- FR-A1- 2 952 577
- US-A1- 2014 065 342

## Description

La présente invention concerne un procédé de réalisation de préformes par application de fibres sur un outillage.

Il est connu notamment par le document EP 1 250 991 des procédés de réalisation de préformes tridimensionnelles par projection de fibres éventuellement associées à un liant. Les fibres déroulées depuis des bobines sont acheminées jusqu'à une tête de projection dans laquelle les fibres sont coupées par des couteaux rotatifs en segments de 10 à 50 mm. La tête est montée à l'extrémité d'un bras robotisé pour faire une projection en continu de fibres coupées sur un outillage, par exemple un moule femelle. Le liant, par exemple sous forme filaire est également acheminé jusqu'à la tête pour être coupé et projeté avec les fibres coupées. Ce moule peut être percé d'une multitude de trous pour permettre une aspiration et un maintien des fibres projetées. Une fois la projection terminée, le moule est refermé et chauffé pour compresser la préforme à l'épaisseur souhaitée, et fondre le liant. La préforme est obtenue après refroidissement et démoulage. Cette préforme peut ensuite être soumise à une opération d'infusion ou d'injection de résine pour obtenir une pièce finale en matériau composite, comprenant des fibres et une matrice de résine. Ce procédé est classiquement utilisé pour la fabrication de préforme à partir de fibres de verre.

Cette technique de projection de fibres assure de bonnes cadences pour la production de préformes. Un inconvénient de cette technique est la faible tenue mécanique de la pièce finale en raison des fibres courtes et non orientées par rapport à des contraintes principales, les fibres courtes étant projetées de manière aléatoire. Cette technique ne peut être utilisée pour la fabrication de pièces de structure.

Il est également connu des procédés dits de placement de fibres dans lesquels des fibres continues sont déposées au contact sur un outillage pour former plusieurs plis dans des orientations définies. Ce procédé d'application au contact est mis en œuvre au moyen d'une tête d'application de fibres comportant un rouleau d'application destiné à venir en contact contre l'outillage pour appliquer une bande formée d'une ou plusieurs fibres plates continues, et un système de guidage pour guider la ou les fibres sur ledit rouleau. Les fibres appliquées peuvent être des fibres plates continues, de type mèches, sèches ou imprégnées de résine thermodurcissable ou thermoplastique, notamment des fibres de carbone, constituées d'une multitude de fils ou filaments de carbone. Ces procédés permettent de réaliser des pièces de structure de bonne tenue mécanique. Toutefois les cadences de production apparaissent peu compatibles avec celle requises dans certains domaines, en particulier dans le domaine automobile.

Afin d'augmenter les cadences, il a été proposé d'appliquer au contact les fibres sur un outillage de drapage sensiblement plan, puis de transférer l'ensemble des plis entre les outillages mâle et femelle d'une presse pour obtenir la préforme avec sa forme finale souhaitée. Suivant la forme de la préforme finale, les fibres ont tendance à se plisser, et cette technique ne permet pas la réalisation de préformes de formes complexes.

WO 2012/045969A1 divulgue un procédé de réalisation de préformes tridimensionnelles suivant le préambule de la revendication 1.

Le but de la présente invention est de proposer une solution visant à pallier les inconvénients précités.

A cet effet, la présente invention propose un procédé suivant la revendication 1 de réalisation de préformes tridimensionnelles.

Selon l'invention, on réalise des plis dans une même orientation avec un recouvrement partiel. Lors du formage les fibres desdits plis se déplacent les unes par rapport aux autres de sorte que la préforme puisse être formée à sa forme finale sans contrainte excessive exercée sur les fibres, et donc sans déformation excessive des fibres. Le procédé selon l'invention permet le formage de pièces tridimensionnelles complexes, avec des fibres orientées, tout en limitant les phénomènes de plissures des fibres lors du formage. Ce principe de plis de même orientation avec recouvrement partiel est effectué pour les orientations et dans les zones dans lesquelles les fibres sont soumises à des efforts longitudinaux importants lors du formage. Les fibres concernées par ces besoins d'allongement sont généralement les fibres continues suivant les efforts principaux, et donc allant d'un bout à l'autre de la préforme.

Selon un mode de réalisation préférentiel, les deux plis de même orientation sont réalisés successivement, ladite application de fibres comprenant la réalisation d'au moins deux plis successifs dans une même orientation, les deux plis se superposant directement. Selon un autre mode de réalisation, ladite application de fibres comprend la réalisation d'au moins deux plis dans une même orientation en intercalant un ou plusieurs plis d'orientations différentes entre les deux dits plis.

Selon l'invention, pour la réalisation de deux plis dans une même orientation, les fibres des deux plis se superposent sur une première longueur, de sorte qu'après formage, lesdites fibres restent superposées en extrémité sur une deuxième longueur inférieure à la première longueur. Cette superposition en extrémité à l'issue du formage permet de garantir une continuité dans la transmission des efforts dans l'orientation en question et donc une meilleure résistance de la pièce dans ladite orientation.

Selon l'invention, l'application de fibres est automatisée et réalisée au moyen d'une tête d'application de fibres, par déplacement relatif de la tête d'application par rapport à la surface de drapage selon différentes trajectoires.

Selon un mode de réalisation, l'étape d'application comprend le placement de fibres au moyen d'une tête de placement de fibres, connue en soi, permettant de draper au contact, au moyen d'un rouleau de compactage, une bande formée d'une ou plusieurs fibres. Selon un autre mode de réalisation, l'étape d'application comprend l'application sans contact de fibres au moyen d'une tête d'application.

Selon un mode de réalisation, le procédé comprend, avant le formage, le blocage de l'ensemble de plis afin de bloquer en position les premiers ou seconds plis de chaque paire de plis de même orientation, de sorte que lors du formage seuls les seconds ou premiers plis non bloqués de chaque paire de plis se déplacent longitudinalement.

Selon un mode de réalisation, le procédé comprend l'application de plusieurs plis de fibres sur une surface d'application sensiblement plane, le transfert de l'ensemble de plis vers une presse, et le formage de l'ensemble de plis entre l'outillage de formage mâle et l'outillage de formage femelle de ladite presse. En variante, les fibres sont appliquées directement sur un outillage de drapage constituant l'outillage de formage mâle ou femelle de la presse.

Le procédé peut comprendre l'application de fibres sèches munies d'un liant, et/ou l'application de fibres pré-imprégnées d'une ou plusieurs résine dites d'imprégnation, et/ou l'application de fibres sèches et l'application d'un liant et/ou de résine d'imprégnation sur la surface d'application et/ou les fibres déjà appliquées simultanément et/ou ultérieurement à l'application des fibres.

De préférence, lors de l'application des fibres, le liant et/ou la résine d'imprégnation permet l'adhésion des fibres appliquées sur la surface d'application et/ou les fibres préalablement appliquées et assure ainsi la cohésion de la préforme. Selon un mode de réalisation, le liant et/ou la résine d'imprégnation sont chauffés lors de l'application des fibres pour permettre ladite adhésion.

Le formage est de préférence effectué à chaud, afin de chauffer le liant et/ou la ou les résines afin d'assurer une meilleure cohésion de la préforme finale et faciliter le déplacement relatif des fibres les unes par rapport aux autres lors du formage, notamment au niveau de leur portions d'extrémités qui se chevauchent. Selon un autre mode de réalisation, le formage est effectué sans chauffage.

Selon un premier mode de réalisation, le procédé selon l'invention est un procédé de réalisation de préformes sèches, comprenant moins de 10% en poids de liant, de préférence moins de 5% en poids de liant, ladite préforme sèche étant par la suite soumise à une opération d'imprégnation d'une résine pour former une pièce composite. Les préformes sèches avec liant comprennent une faible quantité de liant, généralement inférieure à 5 %, permettant de maintenir la cohésion de la préforme, tout en autorisant son imprégnation ultérieure. Les préformes sèches sont obtenues par application de fibres sèches munies d'un liant et/ou par application de fibres sèches, sans liant, et application de liant sur la surface d'application et/ou les fibres sèches. Ladite application de liant comprend de préférence la pulvérisation d'un liant liquide et/ou la projection d'un liant sous forme de poudre, ledit liant permettant l'adhésion des fibres appliquées sur la surface d'application et/ou les fibres préalablement appliquées.

Selon un second mode de réalisation, le procédé est un procédé de réalisation de préformes de type pré-imprégnées, comprenant au moins 30% en poids d'une ou plusieurs résines thermoplastiques et/ou thermodurcissables, dites d'imprégnation, de préférence au moins de 40% en poids, la ou lesdites résines constituant la matrice de la pièce composite finale, la préforme pré-imprégnée étant pas la suite soumise à une opération d'imprégnation, pour une imprégnation à cœur des résines dans les fibres, puis une opération de durcissement. Les préformes pré-imprégnées sont obtenues par application de fibres pré-imprégnées et/ou par application de fibres sèches et application d'une ou plusieurs résines sur la surface d'application et/ou les fibres sèches.

Selon un mode de réalisation, le procédé comprend une étape de définition des zones dans lesquelles des fibres d'orientation donnée sont soumises à des efforts importants lors du formage, via un logiciel de simulation de formage, et une étape de définition de trajectoires pour la réalisation des plis comprenant des plis de même orientation se superposant partiellement dans lesdites zones, l'application de fibres étant réalisée à partir de cette définition de trajectoires.

La présente invention a également pour objet un procédé de fabrication de pièces en matériau composite, caractérisé en ce qu'il comprend la réalisation d'une préforme tel que décrit précédemment, une étape d'imprégnation de résine dans la préforme, ladite étape d'imprégnation comprenant l'ajout d'une ou plusieurs résines d'imprégnation par infusion ou injection de la préforme sèche, ou le chauffage de la préforme pré-imprégnées pour imprégner dans l'ensemble de la préforme la ou les résines formant le liant, et une étape de durcissement.

L'invention sera mieux comprise, et d'autres buts, détails, caractéristiques et avantages apparaîtront plus clairement au cours de la description explicative détaillée qui va suivre de modes de réalisation particuliers actuellement préférés de l'invention, en référence aux dessins schématiques annexés, sur lesquels :
- la figure 1 est une vue schématique partielle en perspective d'un exemple de préforme tridimensionnelle réalisée selon le procédé selon l'invention ;
- les figures 2A à 2D sont des vues schématiques illustrant différentes étapes du procédé pour la réalisation de la préforme de la figure 1, la figure 2A illustrant l'opération de drapage, les figures 2B et 2C illustrant l'opération de formage, et la figure 2D illustrant la préforme résultante après démoulage ;
- les figures 3A et 3B sont deux vues schématiques de dessus de l'outillage de drapage, illustrant le drapage de deux plis successifs à 0° selon l'invention ;
- les figures 4A et 4B sont deux vues schématiques de dessus de l'outillage de drapage, illustrant le drapage de deux plis successifs à +45° selon l'invention ;
- les figures 5A et 5B sont deux vues schématiques de dessus de l'outillage de drapage, illustrant le drapage de deux plis successifs à 90° selon l'invention ;
- les figures 6A et 6B sont deux vues schématiques illustrant le comportement de deux plis successif à 0° lors du formage ;
- les figures 7A, 7B et 7C sont des vues schématiques illustrant l'opération de formage selon une variante de réalisation ;
- les figures 8A à 8D sont des vues schématiques illustrant un procédé selon une variante de réalisation de l'invention, la figure 8A illustrant l'opération de drapage, les figures 8B et 8C illustrant l'opération de formage, et la figure 8D illustrant la préforme résultante après démoulage ; et,
- la figure 9 illustre le drapage de deux plis successifs à 90° lors de l'opération de drapage de la figure 8A.

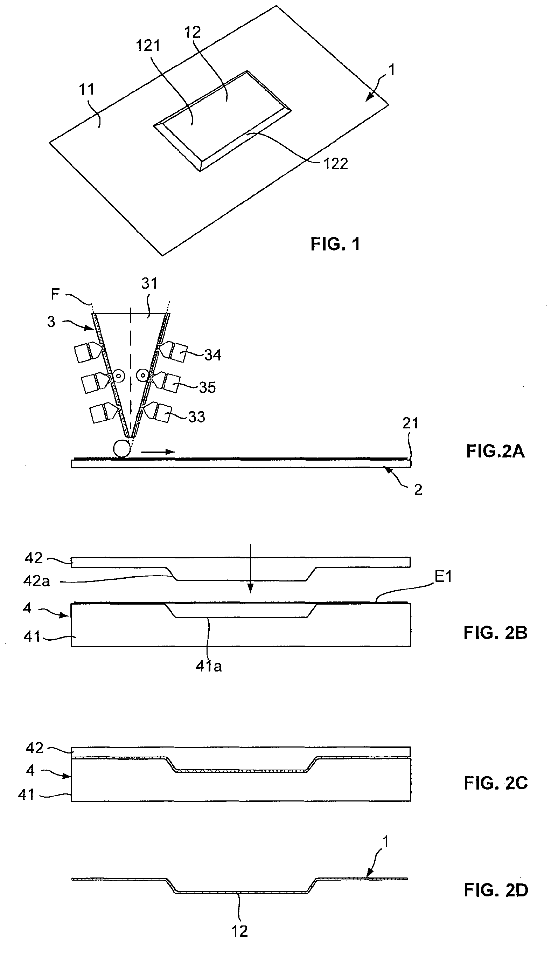

La figure 1 illustre un exemple de préforme 1 réalisable selon le procédé selon l'invention, par drapage de fibres continues et formage. La préforme se présente sous la forme d'une plaque sensiblement plane munie d'une protubérance ou bossage 12 central rectangulaire sur une face principale, ledit bossage formant un renfoncement correspondant sur l'autre face principale de la plaque. La protubérance 12 présente une paroi de fond 121 plane reliée à la partie plane 11 de la plaque par quatre parois latérales 122 inclinées formant rampe.

Les figures 2A à 2D illustrent les étapes du procédé de réalisation de cette préforme 1. Dans une première étape, des plis sont drapés à plat sur un outillage de drapage 2 dans des différentes orientations, par exemple à 0°, 90°, +45° et -45°, en effectuant deux plis successifs dans une même orientation, tel que décrit ci-après.

Dans cet exemple de réalisation, le drapage est effectué au moyen d'une tête 3 de placement de fibres, connue en soi, permettant le drapage automatique au contact de bandes formées d'une ou plusieurs fibres. Les fibres F entrent dans la tête 3 sous la forme de deux nappes de fibres, et la tête comprend un système de guidage 31 permettant de guider les fibres vers le rouleau de compactage sous la forme d'une bande de fibres dans laquelle les fibres sont disposées côte à côte, par exemple sensiblement bord à bord. La tête comprend, de part et d'autre du système de guidage principal, des moyens de coupe 33 pour couper individuellement chaque fibre passant dans le système de guidage, des moyens de blocage 34 disposés en amont des moyens de coupe par rapport à la direction d'avancement des fibres, pour bloquer chaque fibre venant d'être coupée, et des moyens de réacheminement ou d'entraînement 35 disposés amont des moyens de coupe, pour entraîner individuellement chaque fibre, ceci afin de pouvoir à tout moment stopper et reprendre l'application d'une fibre, ainsi que choisir la largeur de la bande.

Le drapage d'une bande est réalisé par déplacement relatif de la tête par rapport à la surface de drapage sensiblement plane de l'outillage de drapage. La tête comprend par exemple une structure support (non représentée) sur laquelle est monté le système de guidage principal et par laquelle la tête peut être assemblée à un système de déplacement, apte à déplacer la tête selon au moins deux directions perpendiculaires l'une à l'autre. En variante, la tête est fixe et le moule est apte à être déplacé par rapport à la tête pour effectuer les opérations de drapage. La tête est par exemple prévue pour recevoir huit fibres, et permettre l'application de bandes de 1 à 8 fibres de 6,35 mm (1/4 de pouce) de large.

A titre d'exemple, la tête est utilisée pour la réalisation d'une préforme sèche, à partir de fibres sèches munies d'un liant classiquement appelé « binder », pour conférer un caractère collant aux fibres lors du drapage. Le liant est sous forme de poudre et/ou d'un ou plusieurs voiles. Les fibres sont par exemple par exemple des fibres de carbone, plates continues, de type mèches, comprenant une multitude de fils ou filaments de carbone, avec un liant thermoplastique sous forme de poudre, présent en quantité de l'ordre de 2% en poids.

Après réalisation des différents plis souhaités, l'ensemble E1 de plis est transféré vers une presse pour l'opération de formage. Tel qu'illustré à la figure 2B, la presse comprend un outillage de formage femelle 41, présentant un renfoncement dont la forme correspondant à celle du bossage 12 de la préforme à réaliser, et un outillage de formage mâle 42 comprenant un bossage 42a de forme complémentaire. L'ensemble E1 de plis est ici transféré sur l'outillage de formage femelle 41. Ce transfert est par exemple réalisé de manière automatique, par exemple au moyen d'un robot équipé d'un préhenseur. Le formage est réalisé par rapprochement relatif de l'outillage de drapage mâle et de l'outillage de moulage femelle, tel qu'illustré à la figure 2C. Ce compactage est de préférence réalisé à chaud, par chauffage des deux outillages 41, 42, afin de ramollir le liant et obtenir une préforme. En variante, le compactage est réalisé en utilisant un système de bâche à vide, par exemple en combinaison avec l'outillage de formage femelle précité. Les outillages sont ensuite écartés l'un de l'autre pour pouvoir démouler la préforme 1 de la presse. La préforme démoulée, telle qu'illustrée à la figure 2D, est ensuite soumise à une opération d'ajout de résine par injection et/ou infusion pour obtenir au final une pièce en matériau composite.

Selon l'invention, le drapage comprend le drapage de plis dans des différentes orientations en drapant des paires de plis dans une même direction avec recouvrement partiel des fibres, ceci afin de permettre un glissement des fibres lors du formage et ainsi faciliter le l'opération de formage.

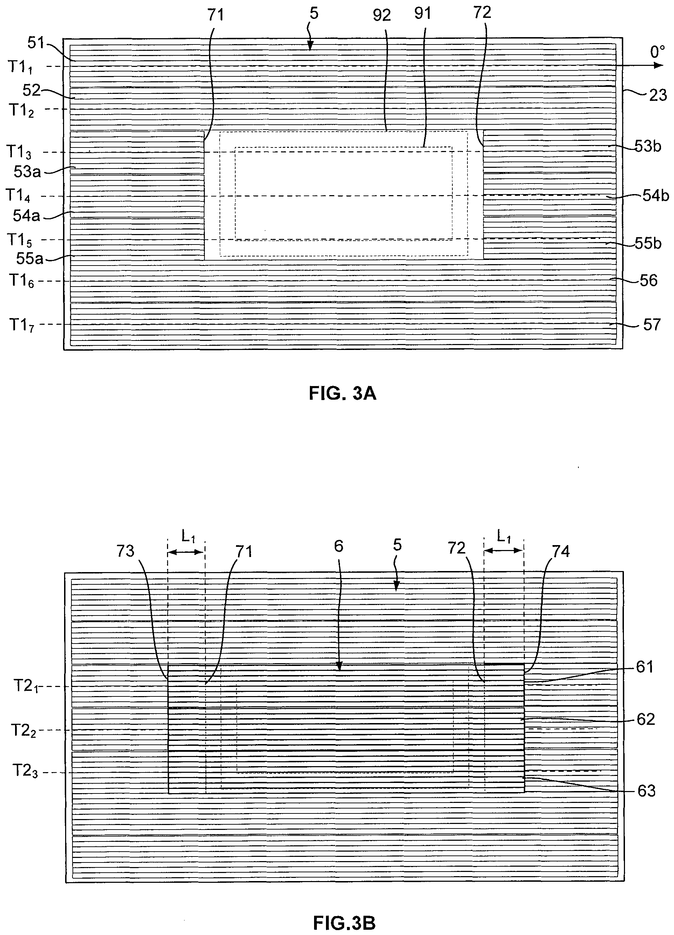

Les figures 3A et 3B illustrent le drapage de deux plis successifs à 0°. En référence à la figure 3A, le premier pli 5 à 90° est réalisé en déplaçant la tête selon des trajectoires de dépose parallèles, au nombre de sept ici, et référencées de T1₁ à T1₇, pour déposer à chaque trajectoire une bande de 8 fibres. Sur cette figure, les lignes en traits discontinus correspondent à la projection des rampes du bossage de la préforme à réaliser, plus précisément à la ligne de jonction 91 entre la paroi de fond et la rampe, et la ligne de jonction 92 entre la rampe et la partie plane. Les fibres de ce premier pli sont destinées à former la partie plane 11 de la préforme 1, et s'interrompent avant les rampes du bossage de la préforme finale. Lors des première et deuxième trajectoires T1₁, T1₂, des bandes 51, 52 continues sont déposées d'un bord transversal 22 à l'autre 23 de l'outillage.

Lors de la troisième trajectoire T1₃, un premier segment 53a de bande et un second segment 53b de bande sont déposés de part et d'autre de la ligne de jonction 92. Le premier segment 53a s'étend depuis le bord transversal 22 et s'interrompt avant la ligne de jonction 92. Les bords de coupe dit intérieurs 71 des fibres de ce premier segment 53a et de ce second segment 53b seront disposés au niveau de la ligne de jonction 92 entre la rampe et la partie plane, ou à distance de cette ligne de jonction, tel qu'illustré sur la figure 3A. Ces deux segments de bande sont drapés en une seule trajectoire de la tête, à la volée, en coupant et bloquant les fibres via les moyens de coupe et les moyens de blocage de la tête de placement pour former le premier segment, et en débloquant les fibres et en les réacheminant pour former le deuxième segment. De manière analogue, des premiers et seconds segments 54a, 55a, 54b, 55b de bandes sont drapés de part et d'autre de la ligne de jonction lors des quatrième et cinquième trajectoires T1₄, T1₅. Lors des sixième et septième trajectoires T1₆, T1₇, des bandes 56, 57 continues en un seul segment sont déposées d'un bord transversal à l'autre de l'outillage.

En référence à la figure 3B, le second pli 6 à 0° est réalisé en déplaçant la tête 3 selon des trajectoires de dépose parallèles T2₁, T2₂, T2₃, au nombre de trois ici, pour déposer à chaque trajectoire une bande 61, 62, 63 de huit fibres. Les fibres de ce second pli sont destinés à former le bossage de la préforme et s'étendent au-delà des rampes pour venir recouvrir partiellement les premiers et seconds segments de bandes du premier pli. Les trois trajectoires de la tête pour ce second pli 6 sont sensiblement confondues avec les troisième, quatrième et cinquième trajectoires de la tête pour le premier pli 5. Lors de ces trajectoires, chaque bande 61, 62, 63 déposée commence avant le bord intérieur 71 des premiers segments 53a, 54a, 55a et s'étend au-delà des bords intérieurs 72 (représentés en traits discontinus sur la figure 3B) des seconds segments 53b, 54b, 55b, de sorte que des portions d'extrémités des bandes 61, 62, 63 de ce second pli viennent recouvrir des portions d'extrémité des premiers et seconds segments sur des longueurs L₁, dite de recouvrement ou chevauchement, définies entre les bords 73, 74 de fibres des bandes du second pli et les bords intérieurs 71, 72 des premiers et seconds segments.

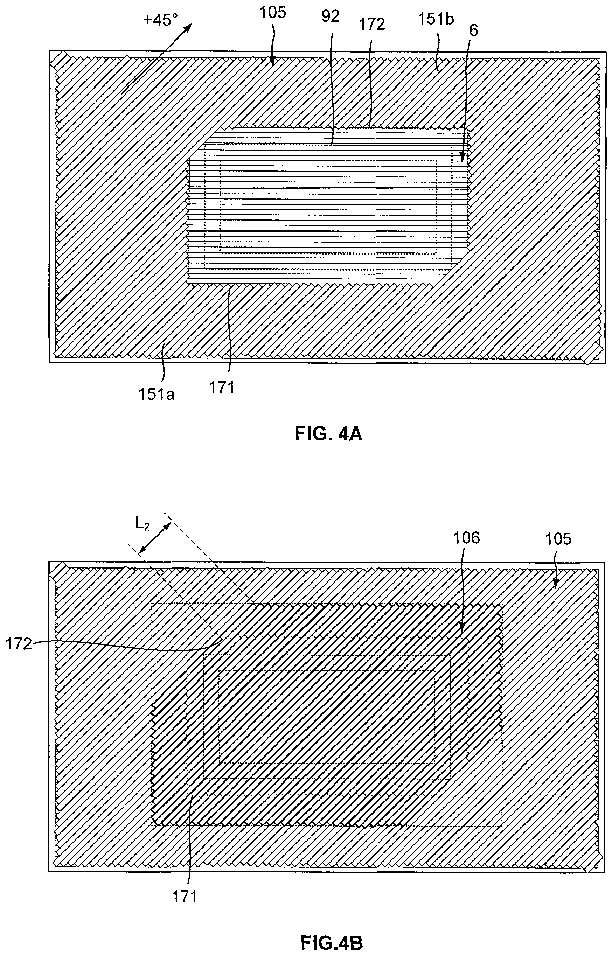

Les figures 4A et 4B illustrent le drapage de deux plis successifs à +45°. De manière analogue au drapage des deux plis à 0°:
- un premier pli à +45°est drapé autour de la ligne de jonction 92, en dehors de la zone définie par cette ligne de jonction, ce premier pli comprenant des premiers et seconds segments de bandes 151a, 151b avec des bords intérieurs 171, 172 disposés à distance de la ligne jonction 92 ;
- un second pli 106 est drapé dans la zone définie par la ligne de jonction 92 en s'étendant au-delà de cette dernière de manière à recouvrir les premiers et seconds segments 151a, 151b sur une longueur L₂.

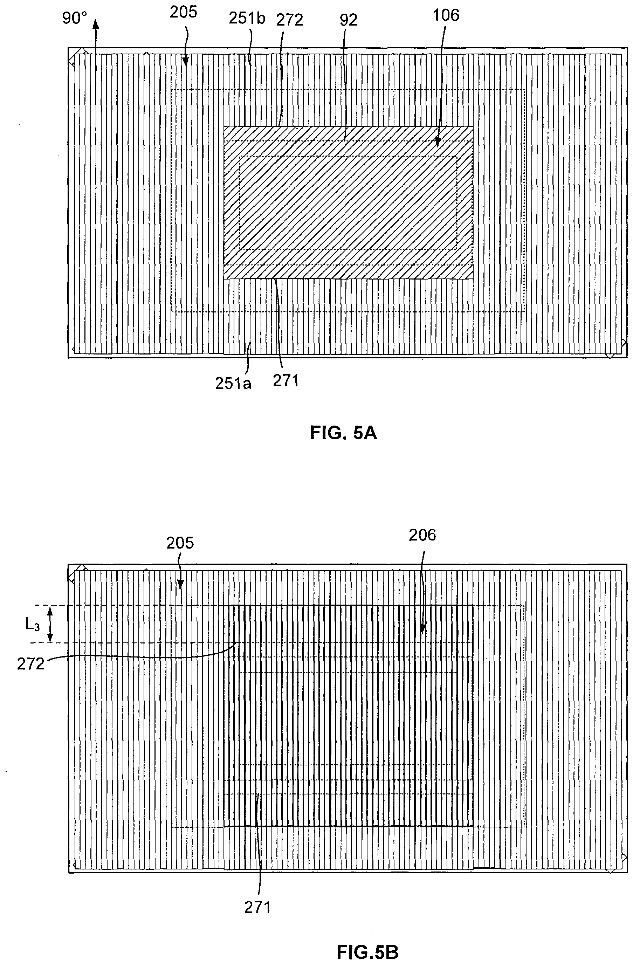

Les figures 5A et 5B illustrent le drapage de deux plis successifs à 90°. Comme précédemment :
- un premier pli 205 à 90°est drapé autour de la ligne de jonction 92, en dehors de la zone définie par la ligne de jonction, ce premier pli comprenant des premiers et seconds segments 251a, 251b de bandes avec des bords intérieurs 271, 272 disposés à distance de la ligne jonction ;
- un second pli 206 est drapé dans la zone définie par la ligne de jonction 92 en s'étendant au-delà de cette dernière de manière à recouvrir les premiers et seconds segments 251a, 251b sur une longueur L₃.

Une pluralité de paires de plis sont drapés dans différentes orientations selon la séquence souhaitée. Des paires de plis à -45° sont drapés tel que décrit précédemment pour les plis à +45°. Pour des paires de plis de même d'orientation, on fait avantageusement varier les longueurs de recouvrement et/ou le positionnement des zones de recouvrement d'une paire à l'autre de manière à limiter la création de de surépaisseurs importantes au niveau des zones de recouvrement. Par ailleurs, des plis intermédiaires en dehors des zones de recouvrement peuvent être prévus.

La tête 3 est ici équipée d'un système de chauffage afin de chauffer le liant en cours d'application des fibres, et ainsi permettre une adhésion des fibres des différents plis et assurer la cohésion de l'ensemble E1 de plis pour son transfert ultérieur. Le système de chauffage, par exemple de type lampe IR, chauffe les fibres avant leur application sur la surface d'application, ainsi que la surface d'application ou les fibres préalablement déposées, en amont du rouleau de dépose par rapport à la direction d'avancement.

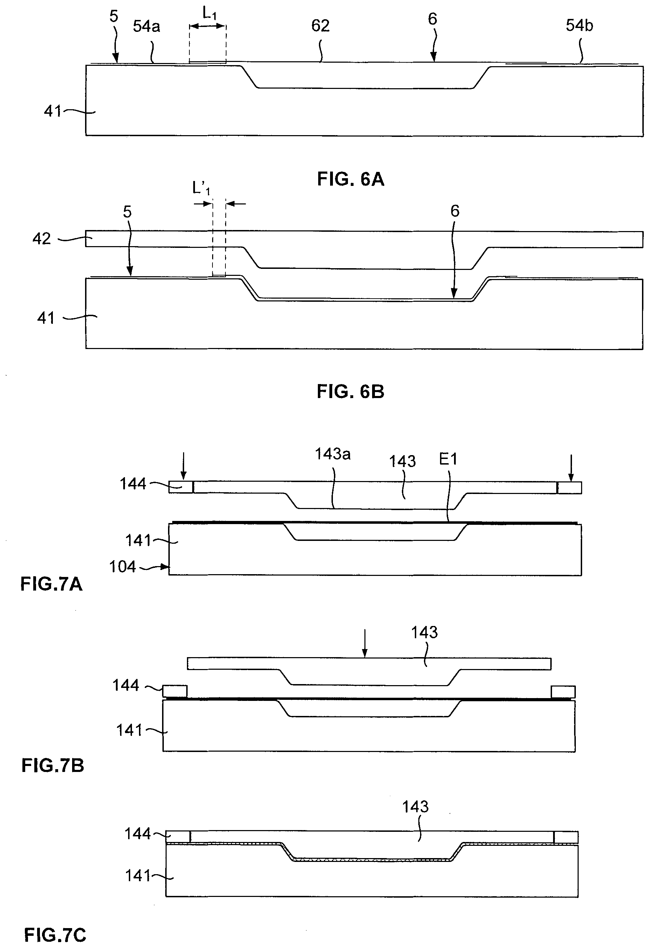

Les figures 6A et 6B illustrent le comportement de deux plis 5, 6 successifs à 0° lors de l'opération de formage. Dans un souci de clarté, seule une paire de plis à 0° est représenté sur ces figures 6A et 6B, par exemple au niveau des premier et second segments 54a, 54b de la quatrième bande du premier pli et de la deuxième bande 62 du deuxième pli 6. Avant formage, le second pli recouvre le premier pli par ses portions d'extrémité sur une longueur L₁. Lors du formage, l'outil de formage mâle appuie sur le second pli pour le plaquer contre l'outillage de formage femelle, les fibres du second pli se déplacent par glissement dans leur direction longitudinale par rapport aux fibres du premier pli. Ce glissement est rendu possible par le chauffage réalisé lors du formage afin de ramollir la résine. A l'issue du formage, le second pli demeure en recouvrement du premier pli sur une longueur L'₁, inférieure à la longueur initiale L₁. La longueur de recouvrement initiale est définie de sorte que la longueur de recouvrement après formage soit supérieure à une valeur seuil, par exemple de 25 ou 30 mm.

Dans cet exemple de réalisation, les premiers plis sont drapés en dehors de la zone centrale définie par la ligne de jonction 92, puis les seconds plis sont drapés dans ladite zone et recouvrent partiellement les premiers plis. Bien entendu, l'ensemble de plis peut comprendre des paires de plis de même orientation dans lesquels les seconds plis précités sont drapés avant les premiers plis, de sorte que premiers plis recouvrent partiellement les seconds plis.

En variante, la préforme est obtenue à partir de fibres de 3,175 mm (1/8 de pouce) ou de 1,27 cm (1/2 pouce), ou par placement de bande, à savoir par drapage d'une bande formée d'une seule fibre large, par exemple de 15,24 cm (6 pouces) ou 30, 48 (12 pouces) de large.

Dans une variante de réalisation, les fibres appliquées sont des fibres pré-imprégnées d'une résine thermoplastique ou thermodurcissable. Après application des fibres, l'ensemble de plis est soumis à une opération de formage, telle que décrite précédemment, puis à une opération de durcissement, également appelée opération de consolidation, ces deux opérations pouvant éventuellement être combinées et être réalisées avec les mêmes outillages.

Les figures 7A, 7B et 7C illustrent l'opération de formage selon une variante de réalisation, dans laquelle les premiers plis 5, 105, 205 sont bloqués en position pendant le formage. L'outillage de formage mâle comprend deux parties, une partie centrale 143 comprenant le bossage 143a et un cadre 144 entourant la partie centrale. Après positionnement de l'ensemble E1 de plis sur l'outillage de formage femelle 141 de la presse 104, le cadre est dans un premier temps abaissé, tel qu'illustré à la figure 7B, pour pincer l'ensemble de plis sur son pourtour entre le cadre et l'outillage de formage femelle, et ainsi bloquer les premiers plis 5, 105, 205. Dans un second temps, la partie centrale 143 est abaissée pour réaliser le formage. Ce blocage des premiers plis garantit que seuls les seconds plis se déplacent lors du formage, sans entraîner les premiers plis.

Dans cet exemple de réalisation, la pièce à réaliser comprend un seul bossage 12 central. Bien entendu, des préformes avec des formes plus complexes présentant plusieurs bossages et/ou renfoncements et/ou rampes peuvent être réalisées en prévoyant à chaque zone sensible, susceptible de générer lors du formage des déformations de fibres dans une .ou plusieurs orientations, des systèmes de paires de plis de même orientation tels que décrits précédemment, avec des bandes ou segments de bande de premiers et seconds plis se chevauchant par leurs portions d'extrémité.

Selon un autre mode de réalisation, les paires de plis de même orientation ne sont pas réalisées successivement, mais en intercalant un ou plusieurs plis d'orientations différentes, notamment en intercalant un ou plusieurs plis de paires de plis d'orientations différentes. A titre d'exemple, dans un premier temps tous les premiers plis 5, 105, 205 sont drapés, et ensuite tous les seconds plis 6, 106, 206 sont drapés.

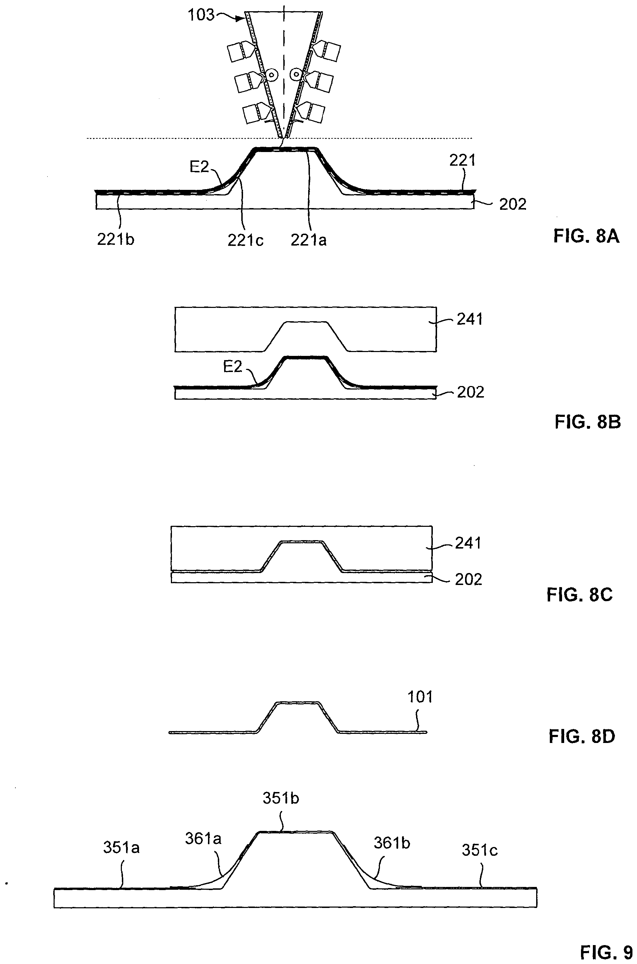

Les figures 8A à 8D illustrent un deuxième mode de réalisation du procédé selon l'invention, pour la réalisation d'une préforme sèche 101 sous la forme d'un profil sensiblement rectiligne de section en oméga, telle qu'illustrée à la figure 8D, par exemple à partir de fibres de carbone sèches munies d'un liant.

Un ensemble E2 de pli est réalisé en superposant plusieurs plis de fibres dans des orientations à 0°, 90°, +45° et -45°, sur la surface d'application 221 d'un outillage de drapage 202, qui constitue ici un outillage de formage mâle. La surface d'application 221 correspond à la surface intérieure de la préforme à réaliser, et est munie d'un bossage longitudinal dont la section correspond à la section du renfort à réaliser. La surface présente ainsi une partie plane supérieure 221a reliée à des parties planes latérales 221b par deux parties formant rampes 221c. Les bandes de fibres sont appliquées ici sans contact, au moyen d'une tête d'application 103, tel que décrit dans la demande de brevet précitée, intitulée « Procédé et machine pour la réalisation de préformes par application de fibres sans compactage de fibres orientées ». Lors du déplacement de la tête selon une trajectoire, les moyens de réacheminement entraînent continûment les fibres pour les déposer sur la surface de l'outil de drapage.

Après réalisation des différents plis souhaités, l'ensemble E2 de plis E est soumis à une opération de formage pour être compacté entre l'outillage de formage mâle et un outillage de formage femelle 241, présentant une gorge longitudinale de forme correspondant à celle du bossage, par rapprochement relatif des deux outillages, tel qu'illustré aux figures 8B et 8C. Ce compactage est éventuellement réalisé à chaud, par chauffage des deux outillages. En variante, le compactage est réalisé en utilisant un système de bâche à vide à la place de l'outillage de formage femelle.

La préforme 101 résultante est ensuite soumise à une opération d'ajout de résine par injection et/ou infusion pour obtenir au final une pièce en matériau composite.

Pour faciliter l'opération de formage, on effectue pour les orientations à 90° des paires de plis successifs à 90° tel qu'illustré à la figure 9. Pour le premier pli, la tête est déplacée selon des trajectoires parallèles pour déposer trois premiers segments 351a, 351b, 351c de bande, les premiers segments étant espacés les uns des autres par des zones non recouvertes comprenant la zone de jonction concave reliant les parties planes latérales 321c aux rampes 321b.

Pour le second pli, la tête est déplacée selon des trajectoires parallèles pour déposer deux seconds segments 361a, 361b sur les zones non recouvertes, en venant partiellement recouvrir les premiers segments. Ce type d'application pour les orientations à 90° autorise un glissement des fibres lors de l'opération de formage, de sorte que les fibres viennent parfaitement se plaquer contre les zones de jonction reliant les rampes aux parties plates latérales. Le même principe de paires de plis de même orientation peut éventuellement être appliqué pour les orientations à +45° et -45°. Pour des préformes se présentant sous la forme de profilés, non rectilignes, par exemple incurvés ou dont la section transversale varie, le principe de paires de plis de même orientation selon l'invention sera également appliqué pour les orientations à 0°.

Selon une variante de réalisation, le premier pli est obtenu par application de fibres courtes, de quelques centimètres, par exemple de l'ordre de 5 à 8 cm, les unes derrières les autres, en effectuant des opérations de coupe des fibres au cours de chaque trajectoire, tel que décrit dans la demande de brevet précitée. Au cours d'une trajectoire, chaque fibre est coupée en segments via ses moyens de coupe associés, tout en étant continûment entraînée par ses moyens de réacheminement. Le second pli est réalisé de la même façon, de sorte que les segments du premier pli et ceux du second pli se chevauchent.

Bien que l'invention ait été décrite en liaison avec différents modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention tel que défini dans les revendications.

## Revendications

1. Procédé de réalisation de préformes (1, 101) tridimensionnelles comprenant
- l'application de fibres (F) continues, sur une surface d'application (21, 221) pour former plusieurs plis (5, 6, 105, 106, 205, 206) de fibres superposés, et
- le formage de l'ensemble de plis pour obtenir une préforme,
dans ce procédé l'application de fibres est réalisée au moyen d'une tête (3, 103) d'application de fibres pour former plusieurs plis (5, 6, 105, 106, 205, 206) de fibres superposés dans différentes orientations, par déplacement relatif de la tête d'application par rapport à la surface de drapage selon différentes trajectoires, chaque pli étant réalisé par application d'une ou plusieurs bandes (51-57 ; 61-63) selon une orientation au moyen de ladite tête, chaque bande étant formée d'une ou plusieurs fibres,
ladite application de fibres comprend la réalisation d'au moins deux plis (5, 6 ; 105, 106 ; 205, 206) dans une même orientation,
le procédé étant **caractérisé en ce que** pour la réalisation de deux plis dans une même orientation, les fibres du second pli (6, 106, 206) se superposant partiellement avec des fibres (5, 105, 205) du premier pli par leurs portions d'extrémité, de sorte que, lors du formage, un déplacement relatif longitudinal, des fibres du second pli par rapport aux fibres du premier pli est obtenu pour réaliser la forme finale de la préforme, les fibres des deux plis se superposent sur une première longueur (L₁), de sorte qu'après formage, lesdites fibres restent superposées en extrémité sur une deuxième longueur (L'₁) inférieure à la première longueur.

2. Procédé selon la revendication 1, **caractérisé en ce que** les deux plis (5, 6 ; 105, 106 ; 205, 206) de même orientation sont réalisés successivement.

3. Procédé selon la revendication1 ou 2, **caractérisé en ce qu'**il comprend, avant le formage, le blocage de l'ensemble de plis afin de bloquer en position les premiers ou seconds plis de chaque paire de plis de même orientation, de sorte que lors du formage seuls les seconds ou premiers plis non bloqués de chaque paire de plis se déplacent longitudinalement.

4. Procédé selon l'une des revendications 1 à 3, **caractérisé en ce qu'**il comprend l'application de plusieurs plis de fibres sur une surface d'application sensiblement plane, le transfert de l'ensemble de plis vers une presse, et le formage de l'ensemble de plis entre l'outillage de formage mâle et l'outillage de formage femelle de ladite presse.

5. Procédé selon l'une des revendications 1 à 4, **caractérisé en ce qu'**il comprend
- l'application de fibres sèches munies d'un liant, et/ou
- l'application de fibres pré-imprégnées d'une ou plusieurs résine, et/ou
- l'application de fibres sèches et l'application d'un liant et/ou de résine sur la surface d'application et/ou les fibres déjà appliquées.

6. Procédé selon la revendications 5, **caractérisé en ce que**, lors de l'application des fibres, le liant et/ou la résine d'imprégnation permet l'adhésion des fibres appliquées sur la surface d'application et/ou les fibres préalablement appliquées et assure ainsi la cohésion de la préforme.

7. Procédé selon la revendications 6, **caractérisé en ce que** le liant et/ou la résine d'imprégnation sont chauffés lors de l'application des fibres pour permettre ladite adhésion.

8. Procédé selon l'une des revendications 1 à 7, **caractérisé en ce qu'**il comprend
- une étape de définition des zones dans lesquelles des fibres d'orientation donnée sont soumises à des efforts importants lors du formage, et
- une étape de définition de trajectoires pour la réalisation des plis comprenant des plis de même orientation se superposant partiellement dans lesdites zones.

9. Procédé de fabrication de pièces en matériau composite, **caractérisé en ce qu'**il comprend
- la réalisation d'une préforme selon l'une des revendications 1 à 8,
- une étape d'imprégnation de résine dans la préforme, ladite étape d'imprégnation comprenant l'ajout d'une ou plusieurs résines par infusion ou injection, ou le chauffage de la préforme pour imprégner dans l'ensemble de la préforme la ou les résines, et,
- une étape de durcissement.

## Patentansprüche

1. Verfahren zur Herstellung von dreidimensionalen Vorformlingen (1, 101), umfassend
- das Auftragen von kontinuierlichen Fasern (F) auf eine Auftragfläche (21, 221), um mehrere Lagen (5, 6, 105, 106, 205, 206) übereinanderliegender Fasern zu bilden, und
- das Formen der Lagenanordnung, um einen Vorformling zu erhalten,
wobei bei diesem Verfahren das Auftragen von Fasern mittels eines Faserauftragkopfes (3, 103) durchgeführt wird, um mehrere Lagen (5, 6, 105, 106, 205, 206) übereinanderliegender Fasern in verschiedenen Ausrichtungen durch relative Verlagerung des Auftragkopfs in Bezug auf die Auflagefläche gemäß verschiedenen Bahnen zu bilden, wobei jede Lage durch Auftragen von einem oder mehreren Bändern (51-57; 61-63) gemäß einer Ausrichtung mittels des Kopfes hergestellt wird, wobei jedes Band aus einer oder mehreren Fasern gebildet ist,
wobei das Auftragen von Fasern die Herstellung von mindestens zwei Lagen (5, 6; 105, 106; 205, 206) in derselben Ausrichtung umfasst,
wobei das Verfahren **dadurch gekennzeichnet ist, dass** sich für die Herstellung von zwei Lagen in derselben Ausrichtung die Fasern der zweiten Lage (6, 106, 206) mit Fasern (5, 105, 205) der ersten Lage mit ihren Endabschnitten teilweise derart überlagern, dass beim Formen eine relative Längsverlagerung der Fasern der zweiten Lage in Bezug auf die Fasern der ersten Lage erhalten wird, um die abschließende Form des Vorformlings herzustellen, wobei sich die Fasern der zwei Lagen über eine erste Länge (L₁) derart überlagern, dass nach dem Formen die Fasern am Ende über eine zweite Länge (L'₁) überlagert bleiben, die kürzer als die erste Länge ist.

2. Verfahren nach Anspruch 1, **dadurch gekennzeichnet, dass** die zwei Lagen (5, 6; 105, 106; 205, 206) derselben Ausrichtung nacheinander hergestellt werden.

3. Verfahren nach Anspruch 1 oder 2, **dadurch gekennzeichnet, dass** es vor dem Formen das Arretieren der Lagenanordnung umfasst, um die ersten oder zweiten Lagen jedes Lagenpaars derselben Ausrichtung derart in Position zu arretieren, dass sich beim Formen nur die nicht arretierten zweiten oder ersten Lagen jedes Lagenpaars längs verlagern.

4. Verfahren nach einem der Ansprüche 1 bis 3, **dadurch gekennzeichnet, dass** es das Auftragen von mehreren Faserlagen auf eine etwa ebene Auftragfläche, die Verlagerung der Lagenanordnung zu einer Presse und das Formen der Lagenanordnung zwischen dem männlichen Formungswerkzeug und dem weiblichen Formungswerkzeug der Presse umfasst.

5. Verfahren nach einem der Ansprüche 1 bis 4, **dadurch gekennzeichnet, dass** es umfasst
- das Auftragen von trockenen Fasern, die mit einem Bindemittel ausgestattet sind, und/oder
- das Auftragen von mit einem oder mehreren Harzen vorimprägnierten Fasern, und/oder
- das Auftragen von trockenen Fasern und das Auftragen eines Bindemittels und/oder von Harz auf die Auftragfläche und/oder die bereits aufgetragenen Fasern.

6. Verfahren nach Anspruch 5, **dadurch gekennzeichnet, dass** das Bindemittel und/oder das Imprägnierharz beim Auftragen der Fasern die Haftung der aufgetragenen Fasern auf der Auftragfläche und/oder den zuvor aufgetragenen Fasern erlaubt und somit den Zusammenhalt des Vorformlings sichert.

7. Verfahren nach Anspruch 6, **dadurch gekennzeichnet, dass** das Bindemittel und/oder das Imprägnierharz beim Auftragen der Fasern erwärmt werden, um die Haftung zu erlauben.

8. Verfahren nach einem der Ansprüche 1 bis 7, **dadurch gekennzeichnet, dass** es umfasst
- einen Definitionsschritt der Zonen, in denen die Fasern bestimmter Ausrichtung beim Formen hohen Kräften ausgesetzt werden, und
- einen Definitionsschritt von Bahnen für die Herstellung der Lagen, umfassend Lagen derselben Ausrichtung, die sich in den Zonen teilweise überlagern.

9. Verfahren zur Herstellung von Teilen aus Verbundmaterial, **dadurch gekennzeichnet, dass** es umfasst
- die Herstellung eines Vorformlings nach einem der Ansprüche 1 bis 8,
- einen Imprägnierschritt des Vorformlings mit Harz, wobei der Imprägnierschritt das Hinzufügen von einem oder mehreren Harzen durch Infusion oder Injektion oder das Erwärmen des Vorformlings zum Imprägnieren des gesamten Vorformlings mit dem oder den Harzen umfasst, und
- einen Schritt des Härtens.

## Claims

1. Method for producing three-dimensional preforms (1, 101) comprising
- application of continuous fibres (F) onto an application surface (21,221) to produce a plurality of superimposed fibre plies (5, 6, 105, 106, 205, 206), and
- forming the set of plies in order to obtain a preform,
in this method the application of fibres is carried out by means of a fibre application head (3, 103) to produce a plurality of superimposed fibre plies (5, 6, 105, 106, 205, 206) in different orientations, by relative displacement of the application head with respect to the lay-up surface along different paths, each ply being produced by application of one or more strips (51-57; 61-63) along an orientation by means of said head, each strip being constituted of one or more fibres,
said application of fibres comprises producing at least two plies (5, 6; 105, 106; 205, 206) in a same orientation,
the method being **characterised in that** for the production of two plies in a same orientation, the fibres of the second ply (6, 106, 206) partially overlap with fibres (5, 105, 205) of the first ply by their end portions, so that, during forming, a longitudinal relative displacement of the fibres of the second ply with respect to the fibres of the first ply is obtained in order to produce the final shape of the preform, the fibres of the two plies superimpose each other over a first length (L1), so that, after forming, the said fibres remain superimposed at the end over a second length (L'1) which is smaller than the first length.

2. Method according to claim 1, **characterised in that** the two plies (5, 6; 105, 106; 205, 206) of the same orientation are produced successively.

3. Method according to claim 1 or 2, **characterised in that** it comprises, prior to forming, blocking the set of plies in order to block in position the first or second plies of each pair of plies of the same orientation, so that during forming only the unblocked second or first plies of each pair of plies displace longitudinally.

4. Method according to one of claims 1 to 3, **characterised in that** it comprises application of a plurality of fibre plies onto a substantially planar application surface, transferring the set of plies to a press, and forming the set of plies between the male forming tooling and the female forming tooling of said press.

5. Method according to one of claims 1 to 4, **characterised in that** it comprises
- the application of dry fibres provided with a binder, and/or
- the application of fibres pre-impregnated with one or more resins, and/or
- the application of dry fibres and the application of a binder and/or resin onto the application surface and/or the fibres already applied.

6. Method according to claim 5, **characterized in that**, during the application of the fibres, the binder and/or impregnating resin allows the adhesion of the applied fibres onto the application surface and/or the previously applied fibres and thus ensures the cohesion of the preform.

7. Method according to claim 6, **characterized in that** the binder and/or impregnating resin are heated during the application of the fibres to enable said adhesion.

8. Method according to one of claims 1 to 7, **characterised in that** it comprises
- a step of defining the areas in which fibres of a given orientation are subjected to significant forces during forming, and
- a step of defining paths for producing plies comprising plies of the same orientation partially superimposed in said areas.

9. Method for manufacturing composite material parts, **characterised in that** it comprises
- the production of a preform according to one of claims 1 to 8,
- a step of impregnating the preform with resin, said impregnation step comprising the addition of one or more resins by infusion or injection, or the heating of the preform to impregnate the resin(s) throughout the preform, and, 3
- a curing step.
